# EUROPÄISCHE PATENTANMELDUNG

(11) **EP 0 679 462 A1**
(43) Veröffentlichungstag der Anmeldung: **02.11.1995**
(21) Anmeldenummer: 94106062.6
(22) Anmeldetag: 27.04.1994
(51) Int. Cl.: B22D 25/04, B22C 9/06, C23C 4/18

(54) **Giessform für die Herstellung von Elektrodengittern für Bleiakkumulatoren**

(71) Anmelder: FREIBERGER NE-METALL GmbH, D-09599 Freiberg (DE)
(72) Erfinder: Pätzold, Volker, Dr. Ing., D-09599 Freiberg (DE)

(57) **Zusammenfassung**

Die Erfindung betrifft eine Gießform aus Stahl für die Herstellung von Elektrodengittern für Bleiakkumulatoren, die als Trennmittel anstelle der herkömmlichen Korkmehlschicht eine poröse metallische Schicht aus teilweise geschmolzenen Metallpartikeln besitzt. Die Hohlraumkonturen der Elektrodengitter sind in die Schicht aus den teilweise geschmolzenen Metallpartikeln eingearbeitet, die nicht ausgearbeiteten Schichtteile sind durch eine chemische Behandlung in die poröse Schicht umgewandelt, die von einer dauerhaften Haltbarkeit gekennzeichnet ist.

## Beschreibung

Die Erfindung betrifft eine Gießform aus Stahl zur Herstellung von Elektrodengittern für Bleiakkumulatoren, die auf ihrer den Formenhohlraum bildenden Innenfläche mit einer festen porösen metallischen Schicht ausgestattet ist, die als Schlichte fungiert und dauerhaft in der Kokille verbleibt.

Für die Herstellung von Akkugittern für Bleiakkumulatoren werden zweigeteilte Gießformen verwendet, die nach dem Schwerkraftprinzip mit der Legierungsschmelze gefüllt und durch Aufklappen nach erfolgter Erstarrung des Akkugitters entformt werden.
Die vollständige Formfüllung mit Legierungsschmelze und die erforderlich schnelle Entformung des Akkugitters werden durch Verwendung einer Korkmehlschicht als Kokillenschlichte auf den Innenflächen der Gießformhälften erreicht.

Diese Korkmehlschlichte kann nur kurzzeitig verwendet werden, da sie sich schnell abnutzt und mit hohem Aufwand regelmäßig erneuert werden muß. Der hohe Aufwand ist zur Einhaltung der genauen und an verschiedenen Gießformstellen differenzierten Dicke der Korkmehlschicht erforderlich, da von der präzisen Schlichteschichtgestalt die Qualität des Akkugitters wesentlich bestimmt wird.

Langzeitig benutzbare Schlichteschichten aus thermisch und mechanisch beständigen Stoffen sind mehrfach bekannt geworden.
Die Beschichtung der Kokilleninnenflächen mit keramischem Material mit unterschiedlicher Dicke zur unterschiedlich schnellen Wärmeabfuhr entsprechend den an den einzelnen Gießformstellen erstarrenden Schmelzemengen ist in der DE-PS 3040960 beschrieben und stellt eine dauerhafte Kokillenschlichtung dar. Die Herstellung einer solchen keramischen Schicht erfolgt nach der DE-OS 3529725 durch Flammspritzen und ist für die Ausübung der Schlichtefunktion durch eine hohe Porosität gekennzeichnet. Das Auftragen der keramischen Schicht wird durch geeignete Vorrichtungen mit unterschiedlicher Dicke vorgenommen; die unterschiedliche Dicke wird nach der DE-OS 3603657 durch nachträgliche materialabtragende Bearbeitung der Keramikschicht entsprechend den Konturen des Gießteils hergestellt.

Die beschriebenen Kokillenbeschichtungen sind mit dem Nachteil behaftet, daß sich die von den keramischen Schichten bewirkte Wärmedämmung ungünstig auf die benötigte Erstarrunggeschwindigkeit der Elektrodengitter, insbesondere bei hohen Gießfolgen auswirkt. Den benötigten Wärmeabfuhrgeschwindigkeiten an den unterschiedlich dicken Gitterstellen kann mit unterschiedlichen Keramikschichtdicken nur durch einen hohen Fertigungsaufwand entsprochen werden. Die keramische Beschichtung hat auf Grund ihrer Sprödigkeit weiterhin den Nachteil, daß sie bei den im Gießmaschinenbetrieb unregelmäßigen und stoßweisen Belastungen vorzeitigen Abnutzungserscheinungen unterworfen ist.

Der Erfindung liegt deshalb die Aufgabe zugrunde, eine Gießform mit einer dauerhaften Beschichtung zur Ausübung der Schlichtefunktion anzugeben, die eine hohe Abkühlgeschwindigkeit mit einer für das gesamte Gitter gleichmäßigen und verzögerten Wärmeabführung ermöglicht und den im Dauerbetrieb einer schnellaufenden Gießmaschine auftretenden stoßweisen Belastungen widerstehen kann.

Die Aufgabe wird erfindungsgemäß dadurch gelöst, daß die Gießformhälften mit Beschichtungen aus teilweise geschmolzenen Metallpartikeln versehen werden, die sich nachträglich durch eine chemische Behandlung in poröse Schichten umwandeln lassen.
In diese Beschichtung, deren Dicke das Doppelte der maximalen Gravurtiefe beträgt, wird die Ausarbeitung der Formenhohlraumkonturen für das Elektrodengitter durch ein bekanntes Verfahren, wie z.B. Fräsen, Schleifen, elektroerosive Bearbeitung, vorgenommen.

Die Herstellung der Beschichtung aus den teilweise geschmolzenen Metallpartikeln erfolgt durch Flammspritzen oder ein anderes Metallspritzverfahren, bei dem zusammenhängende "Metallbrücken" aus den Partikeln entstehen, die eine gleichmäßige und der erforderlichen Wärmedämmung entsprechende verzögerte Wärmeabführung bewirken. Die gleichzeitig entstehenden Hohlräume in der Schicht aus den teilweise geschmolzenen Metallpartikel sind im Zusammenhang mit weiteren geringen nichtmetallischen Beimengungen zu der Schicht die Voraussetzung für die Entstehung einer Porenstruktur durch die nachträgliche chemische Behandlung, die die Anforderungen an die Kokillenschlichte für das Gießen von Elektrodengittern erfüllt. Als vorteilhaft hat sich herausgestellt, daß die so erzeugte poröse Schicht so elastisch und plastisch ist, daß sie Ungleichmäßigkeiten in den Dichtflächen der Gießform ausgleicht und damit gleichmäßige Gitterqualitäten über lange Standzeiten gewährleistet.

### Ausführungsbeispiel:

Eine Gießform, bestehend aus zwei Formhälften, ist auf ihren plangeschliffenen Innenflächen mit einer Partikelschicht durch Flammspritzen belegt, für das ein Stahlpulver aus der Legierung X8CrNi mit einer Mindestkorngröße von 125µm verwendet wurde. Zur Unterstützung der chemischen Nachbehandlung wurden dem Spritzpulver 10 Vol.-% Aluminiumoxidpulver mit einer mittleren Korngröße von 50µm beigemischt.

Nach der Herstellung der Formenhohlraumvertiefungen in den Spritzschichten erfolgte durch eine chemische Lösebehandlung mit einem Gemisch aus konz. Salpetersäure und konz. Salzsäure die Herstellung der für die Schlichteschicht erforderlichen Porenstruktur.

## Patentansprüche

1. Gießform für die Herstellung von Elektrodengittern für Bleiakkumulatoren nach dem Fallgußprinzip aus zwei Stahlplatten, die mit zwei aneinanderliegenden Flächen einen Formenhohlraum umschließen,**dadurch gekennzeichnet**, daß die hohlraumseitigen Flächen der planen Stahlplatten mit guthaftenden Schichten aus teilweise geschmolzenen metallischen Partikeln überzogen sind, in denen die den Hohlraum bildenden Vertiefungen eingearbeitet und die nichtausgearbeiteten Schichtteile durch eine chemische Behandlung, die durch nichtmetallische Beimengungen in der Schicht aus den teilweise geschmolzenen Metallpartikeln unterstützt wird, in poröse Schichten umgewandelt sind.

2. Gießform nach Anspruch 1 dadurch gekennzeichnet, daß die guthaftenden Schichten aus teilweise geschmolzenen metallischen Partikeln aus nichtrostendem Stahl bestehen und durch Flammspritzen hergestellt werden.
